# EUROPÄISCHE PATENTSCHRIFT

(11) **EP 2 646 888 B1**
(45) Veröffentlichungstag und Bekanntmachung des Hinweises auf die Patenterteilung: **10.08.2016**
(21) Anmeldenummer: 11764715.6
(22) Anmeldetag: 28.09.2011
(51) Int. Cl.: G06F 1/18

(54) **GEHÄUSE FÜR EIN COMPUTERSYSTEM UND VERWENDUNG EINES GEHÄUSES**
HOUSING FOR A COMPUTER SYSTEM AND USE OF A HOUSING
BOÎTIER POUR UN SYSTÈME INFORMATIQUE ET UTILISATION D'UN BOÎTIER

(30) Priorität: 30.11.2010 DE 102010052931
(43) Veröffentlichungstag der Anmeldung: 09.10.2013
(73) Patentinhaber: Fujitsu Technology Solutions Intellectual Property GmbH, 80807 München (DE)
(72) Erfinder: SCHELSHORN, Lorenz, 86179 Augsburg (DE); KÖHLER, Friedrich, 86179 Augsburg (DE)
(74) Vertreter: Epping - Hermann - Fischer
(86) Internationale Anmeldenummer: PCT/EP2011/066914
(87) Internationale Veröffentlichungsnummer: WO 2012/072306

(56) Entgegenhaltungen:
- US-A- 4 977 392
- US-A- 5 479 152
- US-A- 6 014 747
- US-A1- 2004 216 471
- US-A1- 2006 049 941
- US-B1- 6 795 926

## Beschreibung

Die Erfindung betrifft ein Gehäuse für ein Computersystem mit wenigstens einer ersten und einer zweiten Gehäuseöffnung, wobei die erste Gehäuseöffnung mit einer ersten Gehäuseabdeckung und die zweite Gehäuseöffnung mit einer zweiten Gehäuseabdeckung verschließbar sind. Die Erfindung betrifft desweiteren die Verwendung eines derartigen Gehäuses in einer Anordnung umfassend wenigstens einen zu überwachenden Computer und wenigstens eine Überwachungsvorrichtung.

Gehäuse für ein Computersystem mit wenigstens einer ersten und einer zweiten Gehäuseöffnung sind vielfach bekannt. Beispielsweise ist aus der deutschen Patentanmeldung DE 102009019517 ein Gehäuse für ein elektronisches Gerät bekannt, das ein Schloss, eine erste Verriegelungsmechanik und eine zweite Verriegelungsmechanik aufweist. Die Verriegelungsmechaniken sind zum Ver- und Entriegeln von unterschiedlichen Gehäuseelementen eingerichtet und zwangsgekoppelt, wobei sie mit dem Schloss zusammenwirken.

Solche Gehäuse werden beispielsweise für so genannte Servercomputer eingesetzt, die eine Mehrzahl von leistungsfähigen Komponenten, beispielsweise Prozessoren und Speicherlaufwerke, umfassen. Um eine flexible Anordnung einer Vielzahl von Komponenten zu ermöglichen, werden hierfür oftmals verhältnismäßig großvolumige, so genannte Towergehäuse eingesetzt. Ein Zugriff auf die in dem Gehäuse angeordneten Einzelkomponenten ist nur verhältnismäßig selten notwendig. Daher werden diese bisweilen hinter Gehäuseabdeckungen in Form von Klappen- oder Gehäusewänden angeordnet.

Insbesondere hochwertige Computergehäuse erlauben eine Überwachung dahingehend, ob ein Gehäuse ordnungsgemäß verschlossen ist. Hierzu ist in der Regel ein Schaltkontakt für eine Gehäuseöffnung vorgesehen, der den Zustand einer Gehäuseabdeckung erfasst.

Aus der US 4,977,392 ist eine Alarmsystem für einen Schrank bekannt. In einer Ausgestaltung mit mehr als einer Schranktür weist das Alarmsystem mehrere Schalter oder einen Mehrfachschalter auf.

Aus der US 5,479,152 ist ein mobile Überwachungsgerät für eine zweiflügelige Kühlschranktür bekannt. Jeder Flügeltür ist ein Schalter zugeordnet. Wenn entweder der erste oder der zweite Schalter geöffnet wird, wird die Schaltung mit einer Betriebsspannung versorgt, so dass sofort oder verzögert ein Alarm ausgelöst werden kann.

Eine Aufgabe der vorliegenden Erfindung ist es, ein besonders einfach aufgebautes Gehäuse für ein Computersystem mit wenigstens zwei verschließbaren Gehäuseöffnungen zu beschreiben. Des Weiteren soll eine Möglichkeit beschrieben werden, einen Öffnungszustand einer Mehrzahl von Gehäuseabdeckungen mit geringem Aufwand an Bauteilen zu überwachen.

Die oben genannte Aufgabe wird unter anderem durch ein Gehäuse gemäß Patentanspruch 1 sowie die Verwendung des Gehäuses gemäß Patentanspruch 7 gelöst.

Gemäß einem ersten Aspekt der Erfindung wird ein Gehäuse für ein Computersystem mit wenigstens einer ersten und einer zweiten Gehäuseöffnung beschrieben, wobei die erste Gehäuseöffnung mit einer ersten Gehäuseabdeckung und die zweite Gehäuseöffnung mit einer zweiten Gehäuseabdeckung verschließbar sind. Das Gehäuse ist dadurch gekennzeichnet, dass ein Schaltelement mit einem Schaltkontakt vorgesehen ist, wobei das Schaltelement derart angeordnet ist, dass sowohl beim Öffnen der ersten Gehäuseabdeckung als auch beim Öffnen der zweiten Gehäuseabdeckung der Schaltkontakt ausgelöst wird, um ein Öffnen des Computergehäuses anzuzeigen. Durch die Verwendung eines einzelnen Schaltelements zur Überwachung des Öffnens zwei verschiedener Gehäuseabdeckungen kann die Anzahl der notwendigen Schaltelemente zur Überwachung reduziert werden.

Dabei ist ein Schaltergehäuse des Schaltelementes beweglich gelagert, wobei ein Teil der ersten Gehäuseabdeckung auf den Schaltkontakt einwirkt und ein Teil der zweiten Gehäuseabdeckung auf das Schaltergehäuse einwirkt, so dass sowohl durch ein Öffnen der ersten Gehäuseabdeckung als auch durch ein Öffnen der zweiten Gehäuseabdeckung eine relative Bewegung zwischen dem Schaltkontakt und dem Schaltergehäuse bewirkt wird.

Gemäß einer vorteilhaften Ausgestaltung ist das Schaltergehäuse drehbar auf einer Wippe im Bereich zwischen der ersten und der zweiten Gehäuseöffnung gelagert. Eine derartige Anordnung erlaubt eine einfache mechanische Übertragung einer Bewegung der ersten Gehäuseabdeckung und eine Bewegung der zweiten Gehäuseabdeckung zum Auslösen des gemeinsamen Schaltkontakts.

Derartige Gehäuse eignen sich insbesondere zur Verwendung in einer Anordnung umfassend wenigstens einen zu überwachenden Computer, der in dem Gehäuse angeordnet ist, und wenigstens eine Überwachungsvorrichtung, die mit dem Schaltelement zum Bereitstellen eines Steuersignals verbunden ist und dazu eingerichtet ist, auf Grundlage des Steuersignals anzuzeigen, ob wenigstens eine der beiden Gehäuseabdeckungen geöffnet ist. Bei einer derartigen Anordnung reicht ein einzelnes Steuersignal aus, um den Computer beziehungsweise den Öffnungszustand seiner Gehäuseabdeckungen zu überwachen. Dies ist insbesondere bei der Überwachung einer Vielzahl unterschiedlicher Computer von Vorteil.

Weitere vorteilhafte Ausgestaltungen sind in den abhängigen Patentansprüchen sowie der nachfolgenden ausführlichen Beschreibung eines Ausführungsbeispiels beschrieben.

Das Ausführungsbeispiel wird unter Bezugnahme auf die Figuren 1 bis 5 näher beschreiben. In den Figuren zeigen:
- Figur 1: eine perspektivische Außenansicht eines Gehäuses,
- Figur 2: eine perspektivische Innenansicht des Gehäuses,
- Figur 3: ein Schaltelement in einem ersten Zustand,
- Figur 4: das Schaltelement in einem zweiten Zustand und
- Figur 5: das Schaltelement in einem dritten Zustand.

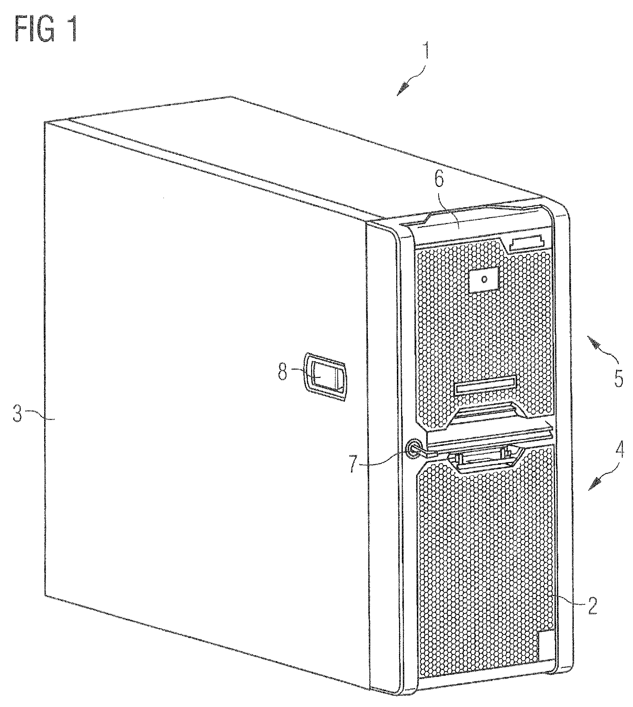

Figur 1 zeigt eine Vorderansicht eines Gehäuses 1 für einen Servercomputer. Im Ausführungsbeispiel handelt es sich bei dem Gehäuse 1 beispielsweise um ein so genanntes Towergehäuse. Das Gehäuse 1 weist im Ausführungsbeispiel eine Vorderseite 2 sowie eine abnehmbare Seitenwand 3 auf. Die Vorderseite 2 umfasst einen unteren Bereich 4 sowie einen oberen Bereich 5. Der untere Bereich 4 weist beispielsweise eine Gehäuseabdeckung mit Lüftungsöffnungen zum Ansaugen oder Abblasen von Kühlluft auf. Der obere Bereich 5 umfasst im Ausführungsbeispiel eine Klappe 6, hinter der eine Mehrzahl von in der Figur 1 nicht sichtbaren Speicherlaufwerken, beispielsweise Festplatten, CD- oder DVD-Laufwerken, angeordnet ist. Optional sind die Laufwerke entnehmbar ausgestaltet und durch die Klappe 6 geschützt. Im Ausführungsbeispiel kann die Klappe 6 mittels eines Schlosses 7 verschlossen werden.
Die Seitenwand 3 kann mittels eines Griffelementes 8 entriegelt und dann von dem Gehäuse 1 abgenommen werden. Nach Abnehmen der Seitenwand 3 kann ein Zugriff auf interne Komponenten des Servercomputers, wie beispielsweise darin angeordnete Lüftermodule, Speichermodule, Prozessoren oder Netzteile erfolgen. In einer Ausgestaltung wirkt das Schloss 7 zusätzlich auf das Griffelement 8 und verriegelt dies.

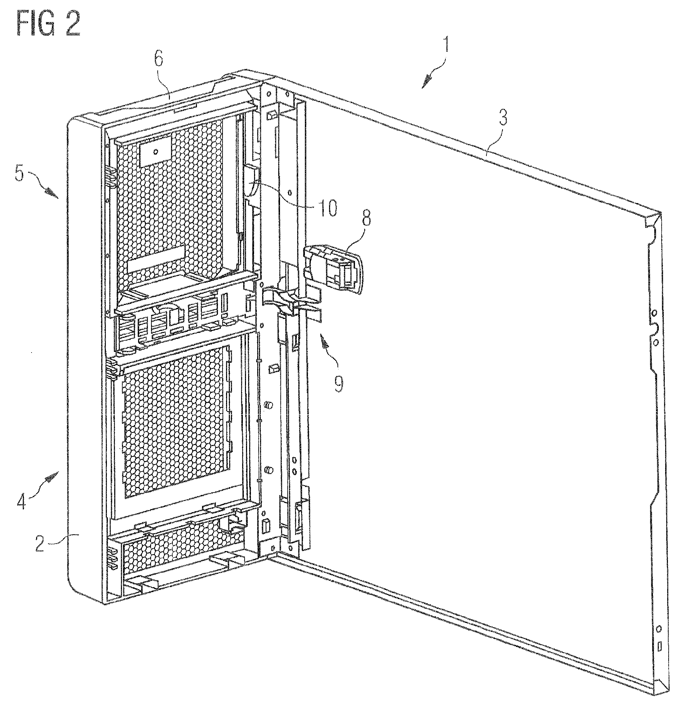

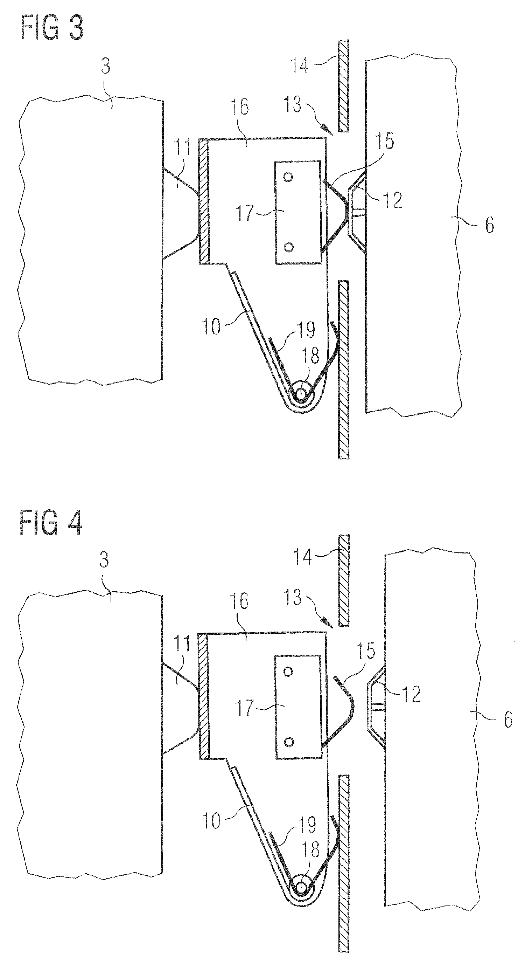

In der Figur 2 ist eine Innenansicht des Gehäuses 1 auf die Vorderseite 2 sowie die Seitenwand 3 dargestellt. Darin ist unter anderem ein Verschlusselement 9 zu erkennen, das mit dem Schloss 7 gekoppelt ist und die Klappe 6 und die Seitenwand 3 verriegelt. Zusätzlich ist zu erkennen, dass in einem Bereich einer Gehäusekante zwischen der Klappe 6 und der Seitenwand 3 ein Schaltelement 10 angeordnet ist. Das Schaltelement 10 dient zum Überwachen eines Öffnungszustands der Gehäuseöffnungen des Gehäuses 1 und wird nachfolgend unter Bezugnahme auf die Figuren 3 bis 5 näher beschrieben.

Figur 3 zeigt das Schaltelement 10 in einem ersten Zustand. In dem ersten Zustand sind sowohl die Klappe 6 als auch die Seitenwand 3 des Gehäuses 1 verschlossen.

In der Figur 3 ist zu erkennen, dass sowohl die Seitenwand 3 als auch die Klappe 6 jeweils eine Schaltnase 11 beziehungsweise 12 aufweist, die auf das Schaltelement 10 einwirken. Insbesondere drückt die Schaltnase 12 der Klappe 6 durch eine Öffnung 13 in einer Gehäusewand 14 auf einen Schaltkontakt 15, beispielsweise einen Schalthebel zum Ansteuern eines im ersten Zustand niedergedrückten Mikroschalters. Die Schaltnase 11 der Seitenwand 3 wirkt auf einen Anschlag einer Wippe 16 auf der ein Schaltergehäuse 17 des Schaltelements 10 montiert ist. Die Wippe 16 ist bezogen auf die Gehäusewand 14 mittels einer Drehachse 18 drehbar gelagert. Zwischen der Wippe 16 und der Gehäusewand 14 ist im in der Figur 3 dargestellten Ausführungsbeispiel eine Feder 19 angeordnet, die eine Kraft auf die Wippe 16 ausübt, mit der diese von der Gehäusewand 14 abgedrückt wird.

Figur 4 zeigt das Schalterelement 10 in einem zweiten Zustand. In dem zweiten Zustand wurde die Klappe 6, mit der beispielsweise die Laufwerke des Computersystems abgedeckt werden, geöffnet.

In dem dargestellten Zustand schaltet das Schaltelement 10 beispielsweise dadurch, dass der Hebel des Schaltkontakts 15 durch die Öffnung 13 der Gehäusewand 14 nach vorne austritt. Handelt es sich bei dem verwendeten Schaltelement beispielsweise um einen so genannten Schließer, der einen Stromkreis bei niedergedrücktem Schaltkontakt 15 schließt, wird daher beim Öffnen der Klappe 6 ein elektrisches Signal durch das Schaltelement 10 unterbrochen. Selbstverständlich kann umgekehrt auch ein Öffner als Schaltelement 10 verwendet werden.

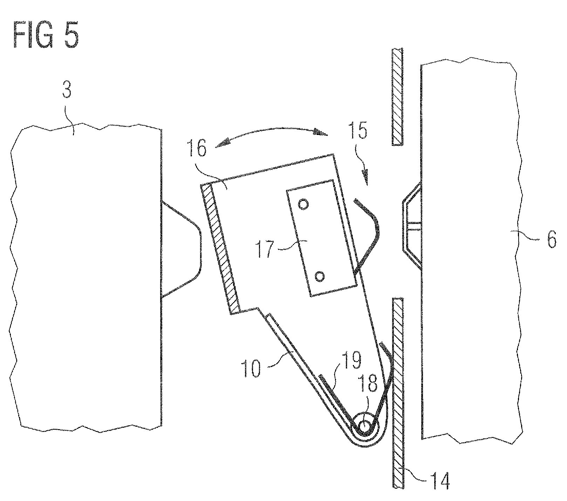

In der Figur 5 ist das Schaltelement 10 in einem dritten Zustand dargestellt. In dem dritten Zustand wurde die Seitenwand 3 von dem Gehäuse 1 abgenommen. Die Klappe 6 ist im in der Figur 5 dargestellten Zustand verschlossen.

Da die Seitenwand im in der Figur 5 dargestellten Zustand nicht länger eine Kraft auf die Wippe 16 ausübt, drückt die Feder 19 die Wippe 16 und damit das Schaltergehäuse 17 des Schaltelements 10 von der Gehäusewand 14 ab. Somit öffnet der Schaltkontakt 15 des Schaltelementes 10 trotz verschlossener Klappe 6 und unterbricht wie im zweiten Zustand ein von dem Schaltelement 10 erzeugtes Steuersignal.
Die von dem Schaltelement 10 erzeugten Steuersignale werden in einer vorteilhaften Ausgestaltung an eine Überwachungsvorrichtung zum Überwachen des Gehäuses 1 übertragen. Dabei kann es sich entweder um eine lokale Anzeigevorrichtung handeln, beispielsweise in Form einer LED an der Vorderseite 2, die anzeigt, ob das Gehäuse 1 ordnungsgemäß verschlossen ist.

Vorteilhafterweise wird das Signal von dem Schaltelement 10 jedoch an eine Vorrichtung zur Fernüberwachung des Computersystems 1 übertragen. Beispielsweise kann ein Schaltausgang des Schaltelementes 10 mit einem so genannten Systemüberwachungsbaustein, auch bekannt als Baseboard Management Controller (BMC), eines Servercomputers verbunden werden. Der Systemüberwachungsbaustein erlaubt dann eine Fernüberwachung des Computersystems über ein Netzwerk von einem zentralen Überwachungscomputer aus, so dass beispielsweise ein Systemadministrator aus der Ferne erkennen kann, ob jemand unberechtigt versucht, auf Laufwerke des Computersystems zuzugreifen oder das Gehäuse 1 unberechtigt zu öffnen.

Obwohl die Erfindung zuvor unter Bezugnahme auf eine konkrete Anordnung mit einem Gehäuse mit zwei Gehäuseöffnungen beschrieben wurde, eignet sie sich grundsätzlich auch zur Verwendung in anderen Gehäusen, insbesondere mit mehr als zwei Gehäuseöffnungen. Um auch in diesem Fall mit nur einem einzigen Schaltelement zur Überwachung des Öffnungszustands sämtlicher Gehäuseöffnungen auszukommen, sollte eine geeignete mechanische Kopplung zwischen jeder der zu überwachenden Gehäuseöffnungen und dem gemeinsamen Schaltelement vorgesehen werden, so dass eine mechanische Oder-Schaltung entsteht.

### Bezugszeichenliste

- 1: Gehäuse
- 2: Vorderseite
- 3: Seitenwand
- 4: unterer Bereich
- 5: oberer Bereich
- 6: Klappe
- 7: Schloss
- 8: Griffelement
- 9: Verschlusselement
- 10: Schaltelement
- 11: Schaltnase (der Seitenwand)
- 12: Schaltnase (der Klappe)
- 13: Öffnung
- 14: Gehäusewand
- 15: Schaltkontakt
- 16: Wippe
- 17: Schaltergehäuse
- 18: Drehachse
- 19: Feder

## Patentansprüche

1. Gehäuse (1) für ein Computersystem mit wenigstens einer ersten und einer zweiten Gehäuseöffnung, wobei die erste Gehäuseöffnung mit einer ersten Gehäuseabdeckung und die zweite Gehäuseöffnung mit einer zweiten Gehäuseabdeckung verschließbar ist, sowie einem Schaltelement (10) mit einem Schaltkontakt (15), wobei sowohl beim Öffnen der ersten Gehäuseabdeckung als auch beim Öffnen der zweiten Gehäuseabdeckung der Schaltkontakt (15) ausgelöst wird, um ein Öffnen des Gehäuses (1) anzuzeigen, **dadurch gekennzeichnet, dass** ein Schaltergehäuse (17) des Schaltelements (10) beweglich gelagert ist, wobei ein Teil der ersten Gehäuseabdeckung auf den Schaltkontakt (15) einwirkt und ein Teil der zweiten Gehäuseabdeckung auf das Schaltergehäuse (17) einwirkt, so dass sowohl beim Öffnen der ersten Gehäuseabdeckung als auch beim Öffnen der zweiten Gehäuseabdeckung eine relative Bewegung zwischen dem Schalterkontakt (15) und dem Schaltergehäuse (17) bewirkt wird.

2. Gehäuse (1) nach Anspruch 1, **dadurch gekennzeichnet, dass** das Schaltergehäuse (17) drehbar auf einer Wippe (16) in einem Bereich zwischen der ersten und der zweiten Gehäuseöffnung gelagert ist.

3. Gehäuse (1) nach Anspruch 2, **dadurch gekennzeichnet, dass** ein Federelement (19) auf die Wippe (16) einwirkt, das eine Kraft in Richtung auf die zweite Gehäuseabdeckung ausübt.

4. Gehäuse (1) nach einem der Ansprüche 1 bis 3, **dadurch gekennzeichnet, dass** die erste Gehäuseabdeckung eine an einer Vorderseite (2) des Gehäuses (1) angeordnete Klappe (6) zum Verschließen von einem oder mehreren von der Vorderseite (2) her zugänglichen Laufwerken oder dergleichen ist.

5. Gehäuse (1) nach einem der Ansprüche 1 bis 4,
**dadurch gekennzeichnet, dass**
die zweite Gehäuseabdeckung eine abnehmbare Seitenwand (3) des Gehäuses (1) zum Verschließen eines Zugangs zu internen Komponenten des Computersystems bildet.

6. Verwendung eines Gehäuses (1) nach einem der Ansprüche 1 bis 5 in einer Anordnung umfassend wenigstens einen zu überwachenden Computer, der in dem Gehäuse (1) angeordnet ist, und wenigstens eine Überwachungsvorrichtung, die mit dem Schaltelement (10) zum Bereitstellen eines Steuersignals verbunden und dazu eingerichtet ist, auf Grundlage des Steuersignals anzuzeigen, ob wenigstens eine der beide Gehäuseabdeckungen geöffnet ist.

7. Verwendung nach Anspruch 6, **dadurch gekennzeichnet, dass** die Überwachungsvorrichtung einen Systemüberwachungsbaustein umfasst.

## Claims

1. Housing (1) for a computer system having at least one first and one second housing opening, wherein the first housing opening can be closed with a first housing cover and the second housing opening can be closed with a second housing cover, as well as having a switch element (10) with a switch contact (15), wherein the switch contact (15) is triggered both when opening the first housing cover and when opening the second housing cover in order to indicate an opening of the housing (1), **characterized in that** a switch housing (17) of the switch element (10) is moveably supported, wherein part of the first housing cover acts on the switch contact (15) and part of the second housing cover acts on the switch housing (17) so that a relative movement between the switch contact (15) and the switch housing (17) is effected both when opening the first housing cover and when opening the second housing cover.

2. Housing (1) according to claim 1, **characterized in that** the switch housing (17) is rotatably supported on a rocker (16) in a region between the first and the second housing opening.

3. Housing (1) according to claim 2, **characterized in that** a spring element (19) acts on the rocker (16), said spring element exerting a force in the direction toward the second housing cover.

4. Housing (1) according to one of claims 1 to 3,
**characterized in that**
the first housing cover is a flap (6) arranged on a front side (2) of the housing (1) for closing one or multiple drives or the like that is/are accessible from the front side (2).

5. Housing (1) according to one of claims 1 to 4,
**characterized in that**
the second housing cover forms a removable side wall (3) of the housing (1) for closing an access to internal components of the computer system.

6. Use of a housing (1) according to one of claims 1 to 5 in an assembly comprising at least one computer to be monitored, which is arranged in the housing (1), and at least one monitoring device, which is connected to the switch element (10) for providing a control signal and which is adapted to indicate, based on the control signal, if at least one of the two housing covers is open.

7. Use according to claim 6, **characterized in that** the monitoring device comprises a system monitoring module.

## Revendications

1. Boîtier (1) destiné à un système d'ordinateurs avec au moins un premier et un second orifice de boîtier, le premier orifice de boîtier étant verrouillable avec un premier capot de boîtier et le deuxième orifice de boîtier avec un second capot de boîtier, ainsi qu'un élément de commutation (10) et un contact de commutation (15),
le contact de commutation (15) étant déclenché aussi bien à l'ouverture du premier capot de boîtier qu'à l'ouverture du second capot de boîtier, afin d'indiquer une ouverture du boîtier (1),
**caractérisé en ce qu'**un boîtier de commutateur (17) de l'élément de commutation (10) est logé de manière mobile, une partie du premier capot de boîtier agissant sur le contact de commutation (15) et une partie du second capot de boîtier agissant sur le boîtier de commutateur (17), de sorte qu'un mouvement relatif est entraîné aussi bien à l'ouverture du premier capot de boîtier qu'à l'ouverture du second capot de boîtier entre le contact de commutateur (15) et le boîtier de commutateur (17).

2. Boîtier (1) selon la revendication 1, **caractérisé en ce que** le boîtier de commutateur (17) est logé de manière pivotante sur une bascule (16) dans une zone entre le première et le second orifice de boîtier.

3. Boîtier (1) selon la revendication 2, **caractérisé en ce qu'**un élément à ressort (19) agit sur la bascule (16) qui exerce une force dans la direction sur le second capot de boîtier.

4. Boîtier (1) selon une quelconque des revendications 1 à 3, **caractérisé en ce que** le premier capot de boîtier est un volet (6) disposé sur une face avant (2) du boîtier (1) en vue de verrouiller un ou plusieurs des lecteurs ou similaires accessibles par la face avant (2).

5. Boîtier (1) selon une quelconque des revendications 1 à 4, **caractérisé en ce que** le second capot de boîtier constitue une paroi latérale détachable (3) du boîtier (1) en vue de verrouiller un accès à des composants internes du système d'ordinateurs.

6. Utilisation d'un boîtier (1) selon une quelconque des revendications 1 à 5 dans une disposition comportant au moins un ordinateur à surveiller, qui est disposé dans le boîtier (1), et au moins un dispositif de surveillance, qui est relié à l'élément de commutation (10) en vue de mettre à disposition un signal de commande et qui est configuré pour indiquer sur la base du signal de commande si au moins un des deux capots de boîtier est ouvert.

7. Utilisation selon la revendication 6, **caractérisée en ce que** le dispositif de surveillance comporte un module de surveillance de système.
